# EUROPEAN PATENT APPLICATION

(11) **EP 4 772 411 A1**
(43) Date of publication of application: **08.07.2026**
(21) Application number: 24762426.5
(22) Date of filing: 05.08.2024
(51) Int. Cl.: B60T 7/12, B60T 8/17, B60T 8/174, B60T 8/32

(54) **CONTROL DEVICE AND CONTROL METHOD FOR RIDER ASSIST SYSTEM**

(30) Priority: 30.08.2023 JP 2023140584
(71) Applicant: Robert Bosch GmbH, 70442 Stuttgart (DE)
(72) Inventor: MAURER, Thomas, Yokohama-shi, Kanagawa 224-8501 (JP); PFAU, Lars, Yokohama-shi, Kanagawa 224-8501 (JP)
(74) Representative: Isarpatent
(86) International application number: PCT/IB2024/057558
(87) International publication number: WO 2025/046351

(57) **Abstract**

The present invention obtains a control device and a control method capable of improving the supportability of a rider. An execution unit that, during when a host vehicle that is a straddle-type vehicle is traveling, executes a positional relationship adjustment operation that is an operation of adjusting a positional relationship between the host vehicle and a preceding vehicle is included, and in the positional relationship adjustment operation, the execution unit: acquires, based on selection operation information that is information on an operation in which a rider of the host vehicle selects one setting mode among a plurality of setting modes in order to collectively set target positional relationships between the host vehicle and the preceding vehicle relative to a plurality of vehicle speed states, the target positional relationships in the plurality of the vehicle speed states; acquires a corrected target positional relationship in which the target positional relationship in at least a part of the vehicle speed states among the plurality of the vehicle speed states has been corrected; and adjusts the positional relationship between the host vehicle and the preceding vehicle to the corrected target positional relationship.

## Description

### Technical Field

The present invention relates to a control device of a rider assistance system, and a control method of the rider assistance system.

### Background Art

In conventional rider assistance systems, a control device automatically controls, during when a host vehicle that is a straddle-type vehicle is traveling, a brake force and/or a drive force to be generated to the host vehicle, and executes a positional relationship adjustment operation that is an operation of adjusting a positional relationship between the host vehicle and a preceding vehicle to a target positional relationship (for example, see PTL 1).

### Citation List

### Patent Literature

PTL 1: WO2018/197965

### Summary of Invention

### Technical Problem

In the conventional rider assistance system, a rider of the host vehicle selects one setting mode among a plurality of setting modes for collectively setting target positional relationships between the host vehicle and the preceding vehicle relative to a plurality of vehicle speed states. Further, the control device acquires a target positional relationship set so as to correspond to the vehicle speed state of the host vehicle in the selected setting mode, and adjusts the positional relationship between the host vehicle and the preceding vehicle to the target positional relationship, in a positional relationship adjustment operation. However, because straddle-type vehicles have smaller vehicle body sizes and have significantly higher degrees of freedom of the traveling positions than vehicles of other types (for example, passenger cars and tracks), the desired positional relationship between the host vehicle and the preceding vehicle tends to largely vary in respective riders. Therefore, even if the rider can collectively set target positional relationships relative to a plurality of vehicle speed states by selecting a desired setting mode among a plurality of setting modes, it can be difficult to position the host vehicle at a position where the rider desires in the positional relationship adjustment operation in some cases.

The present invention is made in view of the abovementioned problems, and obtains a control device capable of improving the supportability for a rider. Moreover, the present invention obtains a control method capable of improving the supportability for the rider. Solution to Problem

A control device according to the present invention is a control device in a rider assistance system, the control device includes: an execution unit that automatically controls, during when a host vehicle that is a straddle-type vehicle is traveling, a brake force and/or a drive force to be generated to the host vehicle, and executes a positional relationship adjustment operation that is an operation of adjusting a positional relationship between the host vehicle and a preceding vehicle, in which the execution unit, in the positional relationship adjustment operation, acquires, based on selection operation information that is information on an operation in which a rider of the host vehicle selects one setting mode among a plurality of setting modes in order to collectively set target positional relationships between the host vehicle and the preceding vehicle relative to a plurality of vehicle speed states, the target positional relationships in the plurality of the vehicle speed states, and acquires a corrected target positional relationship in which the target positional relationship in at least a part of the vehicle speed states among the plurality of the vehicle speed states has been corrected, and adjusts the positional relationship between the host vehicle and the preceding vehicle to the corrected target positional relationship.

A control method according to the present invention is a control method of a rider assistance system, the control method includes: by an execution unit of a control device, automatically controlling, during when a host vehicle that is a straddle-type vehicle is traveling, a brake force and/or a drive force to be generated to the host vehicle, and executing a positional relationship adjustment operation that is an operation of adjusting a positional relationship between the host vehicle and a preceding vehicle; and by the execution unit, in the positional relationship adjustment operation, acquiring, based on selection operation information that is information on an operation in which a rider of the host vehicle selects one setting mode among a plurality of setting modes in order to collectively set target positional relationships between the host vehicle and the preceding vehicle relative to a plurality of vehicle speed states, the target positional relationships in the plurality of the vehicle speed states, and acquiring a corrected target positional relationship in which the target positional relationship in at least a part of the vehicle speed states among the plurality of the vehicle speed states has been corrected, and adjusting the positional relationship between the host vehicle and the preceding vehicle to the corrected target positional relationship.

### Advantageous Effects of Invention

With the control device and the control method according to the present invention, in the positional relationship adjustment operation, the execution unit acquires, based on selection operation information that is information on an operation in which a rider of the host vehicle selects one setting mode among a plurality of setting modes in order to collectively set target positional relationships between the host vehicle and the preceding vehicle relative to a plurality of vehicle speed states, the target positional relationships in the plurality of the vehicle speed states. Further, the execution unit acquires a corrected target positional relationship in which the target positional relationship in at least a part of the vehicle speed states among the plurality of the vehicle speed states has been corrected, and adjusts the positional relationship between the host vehicle and the preceding vehicle to the corrected target positional relationship. Therefore, in the positional relationship adjustment operation, the possibility of positioning the host vehicle to a desired position of the rider can be improved.

### Brief Description of Drawings

Fig. 1 is a diagram illustrating a mounted state of a rider assistance system according to an embodiment of the present invention to a straddle-type vehicle.
Fig. 2 is a diagram illustrating a system configuration of the rider assistance system according to the embodiment of the invention.
Fig. 3 is a diagram for describing a configuration of the rider assistance system according to the embodiment of the invention.
Fig. 4 is a diagram for describing the configuration of the rider assistance system according to the embodiment of the invention.
Fig. 5 is a diagram for describing the configuration of the rider assistance system according to the embodiment of the invention.
Fig. 6 is a diagram for describing the configuration of the rider assistance system according to the embodiment of the invention.
Fig. 7 is a diagram illustrating an operation flow of a control device in the rider assistance system according to the embodiment of the invention.

### Description of Embodiments

Hereinafter, an embodiment of a control device and a control method according to the present invention will be described with reference to the drawings.

Note that, the configuration, the operation, and the like to be described in the following are examples, and the control device and the control method according to the invention are not limited to the case having such the configuration, the operation, and the like.

For example, hereinafter, a case where the control device and the control method according to the invention are used in a rider assistance system of a two-wheeled motor vehicle is described, however, the control device and the control method according to the invention may be used for a rider assistance system of a straddle-type vehicle other than the two-wheeled motor vehicle. The straddle-type vehicle indicates a vehicle that is driven by a rider who straddles on a vehicle body. The straddle-type vehicle includes, for example, motorcycles (a two-wheeled motor vehicle and a three-wheeled motor vehicle), and a bicycle. The motorcycle includes a vehicle that uses an engine as a power source, a vehicle that uses an electric motor as a power source, and the like. The motorcycle includes, for example, a motorbike, a scooter, and an electric scooter. The bicycle indicates a vehicle capable of traveling on a road by a pedal force of a rider that is applied to pedals. The bicycle includes a usual bicycle, an electric assist bicycle, an electric bicycle, and the like.

Moreover, hereinafter, the same or similar descriptions are simplified or omitted as appropriate. Moreover, in the respective drawings, the same reference numerals are assigned to the same or similar portions or assigning reference numerals thereto is omitted. Moreover, detailed structures are simplified or omitted as appropriate.

### Embodiment

Hereinafter, a rider assistance system according to an embodiment will be described.

### <Configuration of Rider Assistance System>

A configuration of the rider assistance system according to the embodiment will be described.

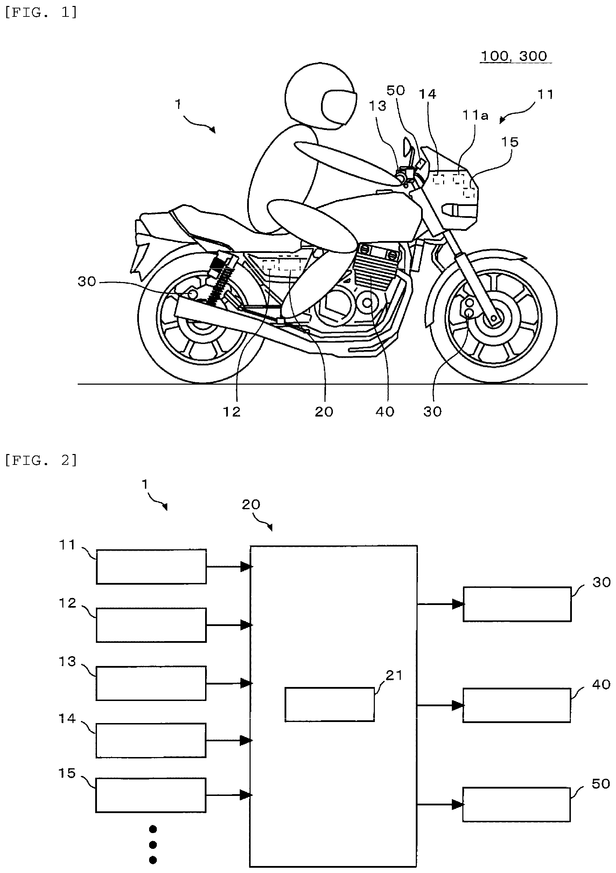

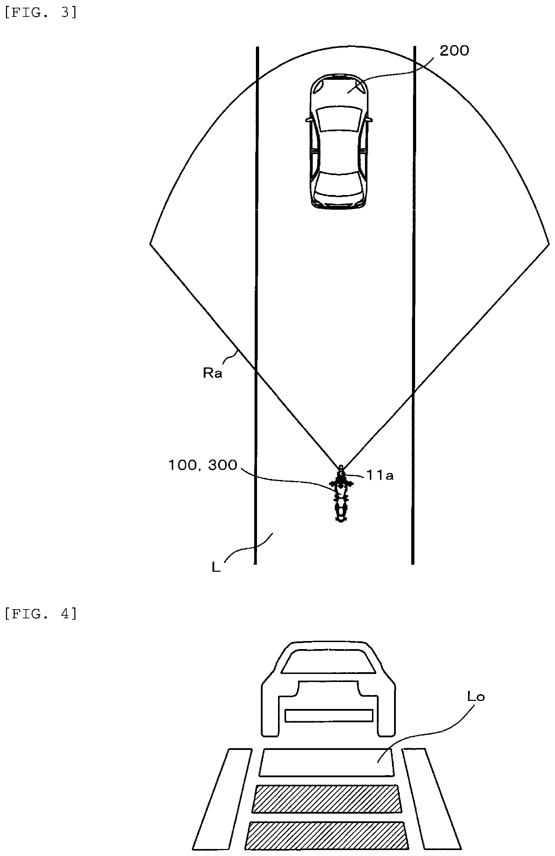

Fig. 1 is a diagram illustrating a mounted state of the rider assistance system according to the embodiment of the invention to a straddle-type vehicle. Fig. 2 is a diagram illustrating a system configuration of the rider assistance system according to the embodiment of the invention. Figs. 3 to 6 are diagrams for describing the configuration of the rider assistance system according to the embodiment of the invention.

As illustrated in Figs. 1 and 2, a rider assistance system 1 is mounted to a host vehicle 100 that is a straddle-type vehicle 300 on which a rider to be assisted by the rider assistance system 1 gets. The rider assistance system 1 includes, for example, if necessary, a surrounding environment detection device 11, a vehicle behavior detection device 12, a setting input device 13, a communication device 14, a positioning device 15, a control device (ECU) 20, a brake device 30, a drive device 40, and a notification device 50.

In the rider assistance system 1, the control device 20 uses an output from the surrounding environment detection device 11, the vehicle behavior detection device 12, the setting input device 13, the communication device 14, and/or the positioning device 15 to execute a rider assistance operation that assists driving of the host vehicle 100 by a rider. The control device 20 outputs control commands to various kinds of devices (for example, the brake device 30, the drive device 40, the notification device 50, and the like) to execute the rider assistance operation. The control device 20 receives, if necessary, outputs from various kinds of devices (illustration is omitted) for detecting other information (for example, information on an operation state of the brake device 30 by the rider, information on an operation state of the drive device 40 by the rider, and the like). The respective units of the rider assistance system 1 may be exclusively used in the rider assistance system 1, or may be shared with other systems.

The surrounding environment detection device 11 includes at least a detection unit 11a in a state of facing the front that is disposed to the host vehicle 100. The detection unit 11a detects surrounding environment information on a front surface of the host vehicle 100. The detection unit 11a may detect, if necessary, surrounding environment information on a diagonal front of the host vehicle 100, in addition to or instead of the surrounding environment information on the front surface of the host vehicle 100. The surrounding environment detection device 11 may include, if necessary, a detection unit in a state of facing the rear that is disposed to the host vehicle 100, and/or a detection unit in a state of facing the side that is disposed to the host vehicle 100. The detection unit 11a and the other detection units are, for example, a radar, a Lidar sensor, an ultrasound sensor, and a camera. The detection unit 11a may include a plurality of sensors that use areas different from each other in front of the host vehicle 100 as detection ranges.

The vehicle behavior detection device 12 is, for example, a vehicle speed sensor, or an inertial sensor (Inertial Measurement Unit (IMU)). The vehicle speed sensor detects a vehicle speed that is generated to the host vehicle 100. The vehicle speed sensor may detect another physical amount capable of being substantially converted into the vehicle speed that is generated to the host vehicle 100. The inertial sensor detects triaxial (a vehicle body front and rear direction, a vehicle body width direction, and a vehicle body height direction) accelerations and triaxial (roll, pitch, and yaw) angular speeds that are generated to the host vehicle 100. The inertial sensor may detect other physical amounts capable of being substantially converted into the triaxial accelerations and the triaxial angular speeds that are generated to the host vehicle 100. Moreover, the inertial sensor may detect only parts of the triaxial accelerations and triaxial angular speeds.

The setting input device 13 receives inputs of various kinds of settings by the rider. For example, the rider can switch the validity and the invalidity of the various kinds of rider assistance operations by using the setting input device 13. Moreover, for example, the rider can set various kinds of modes or various kinds of control parameters (for example, allowable values) that are used in the various kinds of rider assistance operations, by using the setting input device 13. The setting input device 13 may receive an operation by a body of the rider (for example, a hand or a foot), or may receive a sound emitted by the rider. Moreover, the setting input device 13 may be provided to the host vehicle 100, or may be provided to the equipment (for example, a helmet or a globe) accompanied with the host vehicle 100.

The communication device 14 performs wireless communication with another communication device provided to another vehicle positioned in the surrounding of the host vehicle 100, and/or performs wireless communication with other communication devices provided to road facilities (for example, a signal, a sign, a guard rail, a utility pole, and a stop line). The communication device provided to another vehicle transmits, for example, traveling state information on another vehicle that is detected in another vehicle, surrounding environment information on another vehicle that is detected in another vehicle, and the like to the communication device 14. Another communication device provided to a road facility transmits, for example, state information on the road facility, surrounding environment information on the road facility that is detected in the road facility, and the like to the communication device 14. The communication device 14 may include a plurality of receiver units that use areas different from each other as communication ranges.

The positioning device 15 receives positioning signals that are transmitted from a plurality of communication satellites, and specifies a position of the host vehicle 100 on the global positioning system. The position of the host vehicle 100 is checked with map information, and position information on the map is acquired.

The control device 20 includes at least an execution unit 21. All or the respective units of the control device 20 may be collectively provided to one housing, or may be separately provided to a plurality of housings. Moreover, all or the respective units of the control device 20 may include, for example, a microcomputer, a microprocessor unit, and the like, may include one whose firmware and the like can be updated, and may be a program module or the like that is executed by a command from the CPU or the like.

The execution unit 21 acquires surrounding environment information on the host vehicle 100 based on an output from the surrounding environment detection device 11, during when the host vehicle 100 is traveling. The surrounding environment information includes positional relationship information that is actual measurement information on a positional relationship between the host vehicle 100 and an object (for example, another vehicle, an obstacle, a road facility, a person, or an animal) that is positioned in the surrounding of the host vehicle 100. The positional relationship information is, for example, information on a relative position, a relative distance, a relative speed, a relative acceleration, a relative jerk, a passing time difference, a prediction time before the collision, and the like. The positional relationship information may be information on other physical amounts capable of being substantially converted into those. Moreover, the surrounding environment information includes characteristic information on an object (for example, another vehicle, an obstacle, a road facility, a person, or an animal) that is positioned in the surrounding of the host vehicle 100. The characteristic information is, for example, braking display lamp information that is information indicating a state of a braking display lamp in another vehicle, signal information that is information indicating a state of a signal, drawing information that is information on a content of drawing on a road (for example, a stop line), sign information that is information indicating a content of a sign, or a traffic event information that is information indicating a traffic event (for example, congestion, a construction, and an accident). The characteristic information may be information on other physical amounts capable of being substantially converted into those. The execution unit 21 may acquire surrounding environment information on the host vehicle 100, based on an output from the communication device 14, during when the host vehicle 100 is traveling.

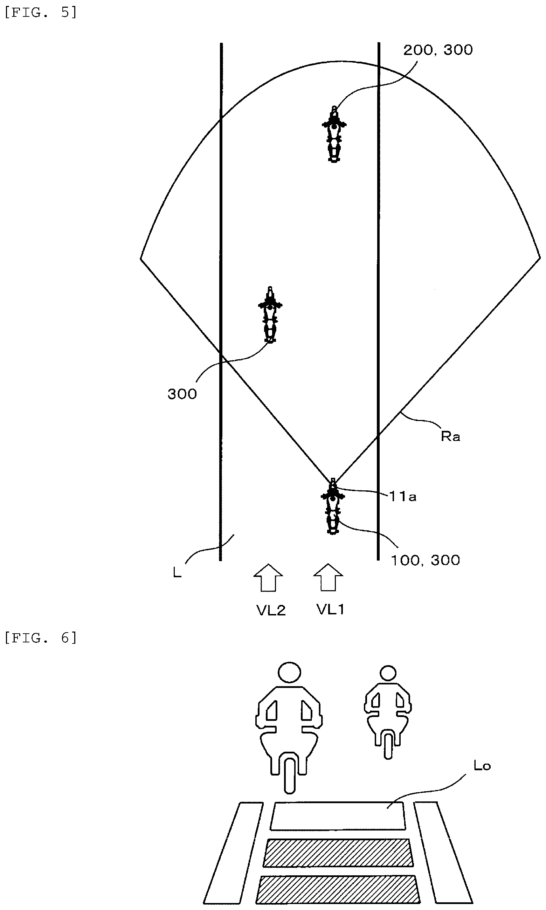

The execution unit 21 automatically controls a brake force and/or a drive force to be generated to the host vehicle 100, as a rider assistance operation, and executes a positional relationship adjustment operation that is an operation of adjusting a positional relationship between the host vehicle 100 and a preceding vehicle 200 (see Figs. 3 and 5). When executing the positional relationship adjustment operation, the execution unit 21 outputs a control command to the brake device 30 or the drive device 40. The brake device 30 brakes the host vehicle 100. The drive device 40 drives the host vehicle 100 as a power source of the host vehicle 100. The brake device 30 may be controlled so as to generate or increase the deceleration, or may be controlled so as to generate or increase the acceleration. The drive device 40 may be controlled so as to generate or increase the acceleration, or may be controlled so as to generate or increase the deceleration. Note that, the positional relationship adjustment operation is cancelled in a case where a predetermined operation intervention has been made by the rider.

When executing the positional relationship adjustment operation, the execution unit 21 outputs a control command to the notification device 50, if necessary. The notification device 50 may make a notification of warning or information with a display (in other words, the perception in which a visual organ is used as a sense organ), may make a notification of warning or information with a sound (in other words, the perception in which an auditory organ is used as a sense organ), or may make a notification of warning or information with a vibration (in other words, the perception in which a tactile organ is used as a sense organ) . For example, the notification device 50 may be a display, a lamp, a speaker, or a vibrator. Moreover, the notification device 50 may be provided to the host vehicle 100, or may be provided to the equipment (for example, a helmet or a globe) accompanied with the host vehicle 100. Moreover, in a notification operation, warning or information may be notified by causing the host vehicle 100 to generate the instantaneous deceleration or acceleration. In other words, the notification device 50 may include the brake device 30 or the drive device 40.

As illustrated in Fig. 3, the execution unit 21 causes the host vehicle 100 to execute the positional relationship adjustment operation, in a case where the execution of a group traveling mode, which is described later, is impossible or invalid. The positional relationship adjustment operation is, based on positional relationship information that is actual measurement information on a positional relationship between the host vehicle 100 and the preceding vehicle 200 that is positioned in a detection range Ra of the detection unit 11a and is travelling one vehicle ahead of the host vehicle 100 in a travelling direction of the host vehicle 100, an operation of adjusting the positional relationship. Note that, in the positional relationship adjustment operation, traveling states of vehicles other than the preceding vehicle 200 that are positioned around the host vehicle 100 may be taken into account.

When the positional relationship adjustment operation is executed, a rider of the host vehicle 100 can collectively set target positional relationships that serve as targets of the positional relationship between the host vehicle 100 and the preceding vehicle 200 relative to a plurality of vehicle speed states (in particular, all the vehicle speed states where the positional relationship adjustment operation can be executed). The rider of the host vehicle 100 performs an operation of selecting one setting mode among a plurality of setting modes by using the setting input device 13, thereby performing the setting. The execution unit 21 acquires target positional relationships in the plurality of the vehicle speed states based on selection operation information that is information on the operation. Moreover, the execution unit 21 outputs a control command to the notification device 50, and causes the notification device 50 to make a notification of a setting state by the rider. For example, the rider of the host vehicle 100 uses the setting input device 13 to select one setting mode among a first setting mode that is a setting mode in which a target positional relationship between the host vehicle 100 and the preceding vehicle 200 becomes a close tendency in all the vehicle speed states where the positional relationship adjustment operation can be executed, a second setting mode that is a setting mode in which a target positional relationship between the host vehicle 100 and the preceding vehicle 200 becomes a separate tendency more than the first setting mode in all the vehicle speed states where the positional relationship adjustment operation can be executed, and a third setting mode that is a setting mode in which a target positional relationship between the host vehicle 100 and the preceding vehicle 200 becomes a separate tendency more than the second setting mode in all the vehicle speed states where the positional relationship adjustment operation can be executed. The execution unit 21 stores a data set in which target positional relationships are defined in the respective vehicle speed states, for every setting mode, and switches the data set in accordance with the selected setting mode, thereby acquiring target positional relationships in all the vehicle speed states where the positional relationship adjustment operation can be executed. In a case where the rider of the host vehicle 100 selects the second setting mode, as illustrated in Fig. 4, in a logo Lo that makes a notification of a positional relationship in the notification device 50, frames at a lowest part and a middle part are highlighted. Note that, a specification in which the rider of the host vehicle 100 selects one setting mode in two setting modes or a specification in which the rider selects one setting mode in four or more setting modes may be employed. Moreover, in a case where the positional relationship adjustment operation can be executed only in a part of the vehicle speed states, a target positional relationship may be acquired and set relative to only the vehicle speed state or only a part of the vehicle speed state. In other words, the rider of the host vehicle 100 only needs to be able to collectively set target positional relationships that serve as targets of the positional relationship between the host vehicle 100 and the preceding vehicle 200 relative to a plurality of vehicle speed states, and the execution unit 21 only needs to acquire target positional relationships in the plurality of the vehicle speed states.

In a case where a group traveling mode can be executed, the execution unit 21 determines whether the group traveling mode is valid during when the host vehicle 100 is traveling. As illustrated in Fig. 5, the group traveling mode is a mode that executes a control operation specialized in a state where the host vehicle 100 and other straddle-type vehicles 300 perform group traveling, in other words, traveling by forming a train as a group. Here, in the group traveling, a plurality of the straddle-type vehicles 300 travel by forming two vehicle trains VL1 and VL2 in one traveling lane L. Note that, the number of the straddle-type vehicles 300 that constitute the group traveling may be two or more.

For example, the execution unit 21 automatically switches the validity and the invalidity of the group traveling mode based on surrounding environment information acquired by the execution unit 21, and the execution unit 21 determines whether the group traveling mode is valid based on information on the switching. The execution unit 21 determines, based on the surrounding environment information acquired by the execution unit 21, whether the traveling of the host vehicle 100 and the other straddle-type vehicles 300 in a specific aspect (for example, as illustrated in Fig. 5, an aspect in which the two vehicle trains VL1 and VL2 are formed such that the host vehicle 100 and the other straddle-type vehicles 300 are aligned in a zigzag shape) continues over a reference time or a reference traveling distance, and automatically validates the group traveling mode if the determination is affirmative. The execution unit 21 may specify another straddle-type vehicle 300 that is positioned in the traveling lane L along which the host vehicle 100 travels and set only the specified another straddle-type vehicle 300 as a determination target, or may specify another straddle-type vehicle 300 that is continuously positioned in the surrounding of the host vehicle 100 over a reference time or a reference traveling distance, without using information on a boundary of the traveling lane L, and set the specified other straddle-type vehicle 300 as a determination target.

For example, the validity and the invalidity of the group traveling mode is switched with a setting input by the rider, and the execution unit 21 determines whether the group traveling mode is valid based on an output from the setting input device 13 that is acquired by the execution unit 21. Note that, the execution unit 21 automatically makes a proposal for validating and/or invalidating the group traveling mode based on the surrounding environment information acquired by the execution unit 21, and may fix the proposal with a setting input of approval by the rider.

The execution unit 21 causes the host vehicle 100 to execute the positional relationship adjustment operation in a state where the group traveling mode is valid. The positional relationship adjustment operation is an operation of adjusting, based on positional relationship information that is actual measurement information on a positional relationship between the host vehicle 100, and the preceding vehicle 200 that is positioned in the detection range Ra by the detection unit 11a, performs the group traveling with the host vehicle 100, and is travelling one vehicle ahead of the host vehicle 100 in the travelling direction of the host vehicle 100, the positional relationship. Note that, in the positional relationship adjustment operation, a traveling state of a vehicle (for example, another straddle-type vehicle 300 that performs the group traveling with the host vehicle 100, or a vehicle that does not perform the group traveling with the host vehicle 100) other than the preceding vehicle 200 that is positioned around the host vehicle 100 may be taken into account. Whether another straddle-type vehicle 300 is a vehicle that is traveling with the host vehicle 100 in a group may be determined based on time course information of a positional relationship with respect to the host vehicle 100, or may be determined based on information registered in advance by the rider. The information registered in advance by the rider is, for example, information on the arrangement (for example, the head, the middle, the tail, the order from the head or the tail, the vehicle train VL1 or VL2 including the host vehicle, and the like) of the host vehicle 100 in the train that is formed due to the group traveling, or information (for example, information on a vehicle type, a color, a number plate, and the like) identifying another straddle-type vehicle 300 that belongs to the group.

When the positional relationship adjustment operation is executed, the rider of the host vehicle 100 can collectively set target positional relationships that serve as targets of the positional relationship between the host vehicle 100 and the preceding vehicle 200 relative to a plurality of vehicle speed states (in particular, all the vehicle speed states where the positional relationship adjustment operation can be executed). The rider of the host vehicle 100 performs an operation of selecting one setting mode among the plurality of the setting modes by using the setting input device 13, thereby performing the setting. The execution unit 21 acquires target positional relationships in the plurality of the vehicle speed states based on selection operation information that is information on the operation. Moreover, the execution unit 21 outputs a control command to the notification device 50, and causes the notification device 50 to make a notification of the setting mode selected by the rider. For example, the rider of the host vehicle 100 uses the setting input device 13 to select one setting mode among the first setting mode that is a setting mode in which a target positional relationship between the host vehicle 100 and the preceding vehicle 200 becomes a close tendency in all the vehicle speed states where the positional relationship adjustment operation can be executed, the second setting mode that is a setting mode in which a target positional relationship between the host vehicle 100 and the preceding vehicle 200 becomes a separate tendency more than the first setting mode in all the vehicle speed states where the positional relationship adjustment operation can be executed, and the third setting mode that is a setting mode in which a target positional relationship between the host vehicle 100 and the preceding vehicle 200 becomes a separate tendency more than the second setting mode in all the vehicle speed states where the positional relationship adjustment operation can be executed. The execution unit 21 stores a data set in which target positional relationships are defined in the respective vehicle speed states for every setting mode, and switches the data set in accordance with the selected setting mode, thereby acquiring target positional relationships in all the vehicle speed states where the positional relationship adjustment operation can be executed. In a case where the rider of the host vehicle 100 selects the second setting mode, as illustrated in Fig. 6, in the logo Lo that makes a notification of a positional relationship in the notification device 50, frames at a lowest part and a middle part are highlighted. Note that, a specification in which the rider of the host vehicle 100 selects one setting mode in two setting modes or a specification in which the rider selects one setting mode in four or more setting modes may be employed. Moreover, in a case where the positional relationship adjustment operation can be executed only in a part of the vehicle speed states, a target positional relationship may be acquired and set relative to only the vehicle speed state or only a part of the vehicle speed state. In other words, the rider of the host vehicle 100 only needs to be able to collectively set target positional relationships that serve as targets of the positional relationship between the host vehicle 100 and the preceding vehicle 200 relative to a plurality of vehicle speed states, and the execution unit 21 only needs to acquire target positional relationships in the plurality of the vehicle speed states.

Note that, in the positional relationship adjustment operation that is executed in a state where the group traveling mode is valid, the detection range Ra by the detection unit 11a may become wider than that in a positional relationship adjustment operation that is executed in a state where the group traveling mode is invalid, or may be shifted to a side (left side in the example illustrated in Fig. 5) opposed to a deviation of a traveling position of the host vehicle 100 in a width direction of the traveling lane L. Moreover, in the positional relationship adjustment operation that is executed in a state where the group traveling mode is valid, a data set in which target positional relationships are defined in the respective vehicle speed states (in particular, a high-speed state) may be a separate tendency, in comparison with a positional relationship adjustment operation that is executed in a state where the group traveling mode is invalid. Alternatively, in the positional relationship adjustment operation that is executed in a state where the group traveling mode is valid, a data set in which target positional relationships are defined in the respective vehicle speed states (in particular, a low-speed state or a slowdown state) may be a close tendency, in comparison with a positional relationship adjustment operation that is executed in a state where the group traveling mode is invalid.

Here, the execution unit 21 acquires, after acquiring a target positional relationship based on the selection operation information, a corrected target positional relationship in which the target positional relationship has been corrected. Further, the execution unit 21 automatically controls a brake force and/or a drive force to be generated to the host vehicle 100 without the operations of the brake device 30 and the drive device 40 by the rider, and executes the positional relationship adjustment operation in which the positional relationship between the host vehicle 100 and the preceding vehicle 200 is adjusted so as to become the corrected target positional relationship. For example, the positional relationship adjustment operation is an adaptive cruise control operation in which the preceding vehicle 200 is a target of speed following, in other words, a time difference between the passing of the preceding vehicle 200 and the passing of the host vehicle 100 as a positional relationship between the host vehicle 100 and the preceding vehicle 200 is controlled so as to become close to a target value of the time difference that is set as a corrected target positional relationship. Alternatively, the positional relationship adjustment operation is an operation to operate the brake device 30 in order to control, in a state where the rider operates the drive device 40, a time difference between the passing of the preceding vehicle 200 and the passing of the host vehicle 100 as a positional relationship between the host vehicle 100 and the preceding vehicle 200 so as to become close to a target value of the time difference that is set as a corrected target positional relationship. Alternatively, the positional relationship adjustment operation is an operation to operate the drive device 40 in order to control, in a state where the rider operates the brake device 30, a time difference between the passing of the preceding vehicle 200 and the passing of the host vehicle 100 as a positional relationship between the host vehicle 100 and the preceding vehicle 200 so as to become close to a target value of the time difference that is set as a corrected target positional relationship. The execution unit 21 stores a data set in which corrected target positional relationships are defined in the respective vehicle speed states, for every setting mode, and switches the data set in accordance with the selected setting mode, thereby acquiring corrected target positional relationships in all the vehicle speed states where the positional relationship adjustment operation can be executed. The execution unit 21 acquires a current or a target corrected target positional relationship corresponding to a vehicle speed state of the host vehicle 100, and causes a brake force and/or a drive force to be generated to the host vehicle 100 such that the positional relationship between the host vehicle 100 and the preceding vehicle 200 becomes close to the corrected target positional relationship. Note that, a time difference between the passing of the preceding vehicle 200 and the passing of the host vehicle 100 is a value obtained by dividing a relative distance between the preceding vehicle 200 and the host vehicle 100 by a current vehicle speed of the host vehicle 100 or a value that is substantially converted into the value.

For example, the corrected target positional relationship in which the target positional relationship is corrected with the setting operation by the rider of the host vehicle 100 is acquired. The rider of the host vehicle 100 can correct at least a part of the target positional relationships that are collectively set relative to a plurality of vehicle speed states by using the setting input device 13. The execution unit 21 acquires the target positional relationship thus corrected as a corrected target positional relationship, and adjusts the positional relationship between the host vehicle 100 and the preceding vehicle 200 so as to become the corrected target positional relationship in the positional relationship adjustment operation. The correction made by the rider of the host vehicle 100 is stored, and when the rider of the host vehicle 100 collectively sets target positional relationships relative to a plurality of vehicle speed states, the target positional relationships are automatically changed to the corrected target positional relationships.

For example, the corrected target positional relationship is corrected and acquired based on driving characteristic information that is information on driving characteristics of the rider of the host vehicle 100 in a state where the positional relationship adjustment operation is not executed. The execution unit 21 acquires a time difference between the passing of the preceding vehicle 200 and the passing of the host vehicle 100 in each vehicle speed state, in a state where the positional relationship adjustment operation is not executed, as driving characteristic information. In a case where the positional relationship adjustment operation is executed in a state where the group traveling mode is valid, in a state where the group traveling is performed without executing the positional relationship adjustment operation, the execution unit 21 acquires a time difference between the passing of the preceding vehicle 200 and the passing of the host vehicle 100 in each vehicle speed state as driving characteristic information. The execution unit 21 automatically corrects at least a part of target positional relationships that are collectively set relative to a plurality of vehicle speed states so as to become close to the time difference acquired as driving characteristic information. The execution unit 21 acquires the target positional relationship thus corrected as a corrected target positional relationship, and adjusts the positional relationship between the host vehicle 100 and the preceding vehicle 200 so as to become the corrected target positional relationship in the positional relationship adjustment operation. Before the execution unit 21 corrects the target positional relationship to the corrected target positional relationship, the execution unit 21 may output a control command to the setting input device 13, cause the rider of the host vehicle 100 to input whether the execution of the correction is approved, and correct the target positional relationship to the corrected target positional relationship based on the driving characteristic information, if the rider of the host vehicle 100 has made an approval operation. In other words, the execution unit 21 determines the propriety of the correction based on the driving characteristic information, based on approval operation information that is information on the approval operation by the rider of the host vehicle 100 by using the setting input device 13.

For example, the execution unit 21 limits the corrected target positional relationship within a defined range. The execution unit 21 limits the corrected target positional relationship such that the time difference between the passing of the preceding vehicle 200 and the passing of the host vehicle 100 in each vehicle speed state as the corrected target positional relationship is not a value less than a lower limit value. The lower limit value may be set to a value to the extent that the time difference between the passing of the preceding vehicle 200 and the passing of the host vehicle 100 does not cause the prevention of the collision between the host vehicle 100 and the preceding vehicle 200 to be difficult or impossible. The execution unit 21 limits the corrected target positional relationship such that the time difference between the passing of the preceding vehicle 200 and the passing of the host vehicle 100 in each vehicle speed state as the corrected target positional relationship is not a value more than an upper limit value. The upper limit value may be set to a value to the extent that the time difference between the passing of the preceding vehicle 200 and the passing of the host vehicle 100 does not cause the detection of the preceding vehicle 200 by the detection unit 11a to be difficult or impossible.

For example, the rider of the host vehicle 100 can collectively set target positional relationships relative to a plurality of vehicle speed states including a stop state. Further, the rider of the host vehicle 100 can correct the target positional relationship that is set to the stop state by using the setting input device 13. In other words, the execution unit 21 adjusts the positional relationship between the host vehicle 100 and the preceding vehicle 200 when the host vehicle 100 stops, to the corrected target positional relationship, in the positional relationship adjustment operation. The corrected target positional relationship to be acquired relative to the vehicle speed state having a vehicle speed more than a reference value may be the time difference between the passing of the preceding vehicle 200 and the passing of the host vehicle 100, and the corrected target positional relationship to be acquired relative to the vehicle speed state (in particular, the slowdown state) having a vehicle speed less than the reference value may be a relative distance between the host vehicle 100 and the preceding vehicle 200. In other words, in the positional relationship adjustment operation, before the vehicle speed is lowered to reach the reference value, the positional relationship between the host vehicle 100 and the preceding vehicle 200 is adjusted so as to become close to the time difference corrected as the corrected target positional relationship, and after the vehicle speed is lowered to be less than the reference value, the positional relationship between the host vehicle 100 and the preceding vehicle 200 is adjusted so as to become close to the relative distance corrected as the corrected target positional relationship.

### <Operation of Rider Assistance System>

An operation of the rider assistance system according to the embodiment will be described.

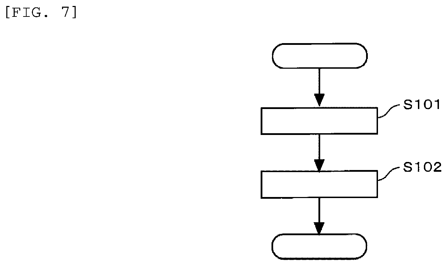

Fig. 7 is a diagram illustrating an operation flow of the control device in the rider assistance system according to the embodiment of the invention.

The execution unit 21 of the control device 20 executes the operation flow illustrated in Fig. 7 during when the host vehicle 100 is traveling.

### (Acquisition Step)

At Step S101, the execution unit 21 acquires positional relationship information that is actual measurement information on a positional relationship between the host vehicle 100 and the preceding vehicle 200 during when the host vehicle 100 is traveling. The execution unit 21 acquires target positional relationships in a plurality of vehicle speed states based on selection operation information that is information on an operation in which the rider of the host vehicle 100 selects one setting mode among a plurality of setting modes in order to collectively set the target positional relationships between the host vehicle 100 and the preceding vehicle 200 relative to the plurality of the vehicle speed states. Moreover, the execution unit 21 acquires a corrected target positional relationship in which the target positional relationship in at least a part of the vehicle speed states among the plurality of the vehicle speed states has been corrected. Moreover, the execution unit 21 acquires various kinds of information, if necessary.

### (Control Operation Step)

At Step S102, the execution unit 21 automatically controls a brake force and/or a drive force to be generated to the host vehicle 100, and executes an operation of adjusting a positional relationship between the host vehicle 100 and the preceding vehicle 200 to the corrected target positional relationship, as a positional relationship adjustment operation. Moreover, the execution unit 21 causes the notification device 50 to execute the notification operation, if necessary, in the positional relationship adjustment operation.

### <Effects by Rider Assistance System>

Effects by the rider assistance system according to the embodiment will be described.

In the rider assistance system 1, in the positional relationship adjustment operation, the execution unit 21 acquires target positional relationships in a plurality of vehicle speed states based on selection operation information that is information on an operation in which the rider of the host vehicle 100 selects one setting mode among a plurality of setting modes in order to collectively set the target positional relationships between the host vehicle 100 and the preceding vehicle 200 relative to a plurality of vehicle speed states. Further, the execution unit 21 acquires a corrected target positional relationship in which the target positional relationship in at least a part of the vehicle speed states among the plurality of the vehicle speed states has been corrected, and adjusts the positional relationship between the host vehicle 100 and the preceding vehicle 200 to the corrected target positional relationship. Therefore, in the positional relationship adjustment operation, the possibility of positioning the host vehicle 100 to a desired position of the rider can be improved.

The embodiment has been described in the foregoing, however, only a part of the embodiment may be executed, parts of the embodiment may be combined, or a part of the embodiment may be changed to a different aspect. In other words, the present invention is not limited to the description of the embodiment.

For example, in the embodiment, the case where relative to all the vehicle speed states where the positional relationship adjustment operation can be executed or relative to the vehicle speed state where the vehicle speed is more than the reference value, a time difference between the passing of the preceding vehicle 200 and the passing of the host vehicle 100 is acquired as a corrected target positional relationship, and the positional relationship between the host vehicle 100 and the preceding vehicle 200 is adjusted so as to become close to the time difference has been described, however, as the corrected target positional relationship, instead of the time difference, a relative distance between the host vehicle 100 and the preceding vehicle 200 may be acquired, and the positional relationship between the host vehicle 100 and the preceding vehicle 200 may be adjusted so as to become close to the relative distance.

For example, the execution unit 21 may output a control command to the notification device 50, and notify the rider of information on the corrected target positional relationship. The notification device 50 may display how the target positional relationship is corrected, on the surrounding of the logo Lo. Alternatively, the notification device 50 may change the shape of a highlighted portion of the logo Lo in accordance with how the target positional relationship is corrected.

### Reference Signs List

- 1:: Rider assistance system
- 11:: Surrounding environment detection device
- 11a:: Detection unit
- 12:: Vehicle behavior detection device
- 13:: Setting input device
- 14:: Communication device
- 15:: Positioning device
- 20:: Control device
- 21:: Execution unit
- 30:: Brake device
- 40:: Drive device
- 50:: Notification device
- 100:: Host vehicle
- 200:: Preceding vehicle
- 300:: Straddle-type vehicle
- Ra:: Detection range
- L:: Traveling lane
- Lo:: Logo
- VL1 VL2:: Vehicle train

## Claims

1. A control device (20) in a rider assistance system (1), the control device comprising:
an execution unit (21) that automatically controls, during when a host vehicle (100) that is a straddle-type vehicle (300) is traveling, a brake force and/or a drive force to be generated to the host vehicle (100), and executes a positional relationship adjustment operation that is an operation of adjusting a positional relationship between the host vehicle (100) and a preceding vehicle (200), wherein
the execution unit (21), in the positional relationship adjustment operation,
acquires, based on selection operation information that is information on an operation in which a rider of the host vehicle (100) selects one setting mode among a plurality of setting modes in order to collectively set target positional relationships between the host vehicle (100) and the preceding vehicle (200) relative to a plurality of vehicle speed states, the target positional relationships in the plurality of the vehicle speed states, and
acquires a corrected target positional relationship in which the target positional relationship in at least a part of the vehicle speed states among the plurality of the vehicle speed states has been corrected, and adjusts the positional relationship between the host vehicle (100) and the preceding vehicle (200) to the corrected target positional relationship.

2. The control device according to claim 1, wherein the target positional relationship is corrected with a setting operation by the rider, and the corrected target positional relationship is acquired.

3. The control device according to claim 1, wherein the target positional relationship is corrected based on driving characteristic information that is information on driving characteristics of the rider in a state where the positional relationship adjustment operation is not executed, and the corrected target positional relationship is acquired.

4. The control device according to claim 3, wherein the execution unit (21) determines propriety of the correction based on the driving characteristic information, based on approval operation information that is information on an approval operation by the rider.

5. The control device according to claim 1, wherein the execution unit (21) limits the corrected target positional relationship to a defined range.

6. The control device according to claim 5, wherein the defined range includes a lower limit value.

7. The control device according to claim 5, wherein the defined range includes an upper limit value.

8. The control device according to claim 1, wherein the execution unit (21) adjusts the positional relationship between the host vehicle (100) and the preceding vehicle (200) when the host vehicle (100) stops, to the corrected target positional relationship, in the positional relationship adjustment operation.

9. The control device according to claim 1, wherein the corrected target positional relationship is a time difference between passing of the preceding vehicle (200) and passing of the host vehicle (100).

10. The control device according to claim 9, wherein
the corrected target positional relationship is the time difference relative to the vehicle speed state where a vehicle speed is more than a reference value, and a relative distance between the host vehicle (100) and the preceding vehicle (200) relative to the vehicle speed state where the vehicle speed is less than the reference value.

11. The control device according to any one of claims 1 to 10, wherein
the positional relationship adjustment operation is executed in a state where a group traveling mode that is a mode in which a control operation specialized in a state where the host vehicle (100) and another straddle-type vehicle (300) perform group traveling is valid, and
the preceding vehicle (200) is the another straddle-type vehicle (300) that performs the group traveling.

12. The control device according to claim 3 or 4, wherein
the positional relationship adjustment operation is executed in a state where a group traveling mode that is a mode in which a control operation specialized in a state where the host vehicle (100) and another straddle-type vehicle (300) perform group traveling is valid,
the preceding vehicle (200) is the another straddle-type vehicle (300) that performs the group traveling, and
the driving characteristic information is information on the driving characteristics in a state where the group traveling is performed without executing the positional relationship adjustment operation.

13. A control method of a rider assistance system (1), the control method comprising:
by an execution unit (21) of a control device (20),
automatically controlling, during when a host vehicle (100) that is a straddle-type vehicle (300) is traveling, a brake force and/or a drive force to be generated to the host vehicle (100), and executing a positional relationship adjustment operation that is an operation of adjusting a positional relationship between the host vehicle (100) and a preceding vehicle (200); and
by the execution unit (21), in the positional relationship adjustment operation,
acquiring, based on selection operation information that is information on an operation in which a rider of the host vehicle (100) selects one setting mode among a plurality of setting modes in order to collectively set target positional relationships between the host vehicle (100) and the preceding vehicle (200) relative to a plurality of vehicle speed states, the target positional relationships in the plurality of the vehicle speed states, and
acquiring a corrected target positional relationship in which the target positional relationship in at least a part of the vehicle speed states among the plurality of the vehicle speed states has been corrected, and adjusting the positional relationship between the host vehicle (100) and the preceding vehicle (200) to the corrected target positional relationship.
